Europäisches Patentamt

**European Patent Office**

**Office européen des brevets**

(11) Numéro de publication: **0 132 478**
A1

## (12) DEMANDE DE BREVET EUROPEEN

(21) Numéro de dépôt: **83401605.7**

(22) Date de dépôt: **02.08.83**

(51) Int. Cl.⁴: **F 03 B 13/06**

(43) Date de publication de la demande:
**13.02.85 Bulletin 85/7**

(84) Etats contractants désignés:
**AT BE CH DE GB IT LI LU NL SE**

(71) Demandeur: **Sauvage, Jean-Marie**
**1, Rue Montyon**
**F-44100 Nantes(FR)**

(72) Inventeur: **Sauvage, Jean-Marie**
**1 Rue Montyon**
**F-44100 Nantes(FR)**

(72) Inventeur: **Sauvage, Jean-Pierre**
**1 Rue Montyon**
**F-44100 Nantes(FR)**

(72) Inventeur: **Sauvage, Philippe**
**1 Rue Montyon**
**F-44100 Nantes(FR)**

(74) Mandataire: **Phélip, Bruno et al,**
**c/o Cabinet Harlé & Phélip 21, rue de la Rochefoucauld**
**F-75009 Paris(FR)**

(54) Installation de production et de stockage d'énergie.

(57) L'invention est relative à une installation de production et de stockage d'énergie.

Le but de l'invention est de fournir de l'énergie électrique à partir d'énergie hydraulique, avec de faibles modifications de l'environnement; Une galerie descendante (6,7) de grande section, descend à grande profondeur depuis la surface, par exemple à la côte - 210, sa capacité pouvant atteindre 9000 m³ et plus. Elle se raccorde à une galerie ascendante (10) de capacité nettement plus faible, qui monte vers la surface. Cette galerie ascendante comporte un dispositif d'injection (12) capable d'utiliser l'énergie cinétique de l'eau qui, lorsqu'on ouvre les vannes 11, pour mettre en communication la galerie descendante pleine avec la galerie ascendante vide, pénètre dans cette dernière à la vitesse d'un raz de marée, pour faire remonter vers la surface les eaux qui ont traversé la turbine d'un turbo-alternateur principal (21) souterrain, alimenté par une dérivation de la galerie descendante (6).

FIG.1B

## Installation de production et de stockage d'énergie

La présente invention est relative à une installation de production et de stockage d'énergie.

On sait que,dans les conditions courantes, mis à part les phénomènes liés à la relativité, il n'y a pas de production d'énergie. Celle-ci se conserve, se transforme ou se dégrade. L'installation de la présente invention est du type hydroélectrique c'est-à-direqu'elle fait appel à la transformation de l'énergie sous une forme cinétique,à savoir celle qui correspond à des masses d'eau en mouvement,en sa forme électrique,qui est à l'époque actuelle,la plus pratique d'emploi.

De tout temps on a cherché des solutions au problème consistant à disposer d'énergie sous des formes , en des endroits ou à des moments où elle est utile,même en en consommant éventuellement des quantités plus importantes mais présentes sous des formes,en des endroits ou en des moments où elle est économiquement de moindre valeur,et de préférence renouvelable.

De nombreux travaux ont eu lieu et sont encore en cours pour valoriser des énergies qui sont abondantes ou bon marché,par exemple l'énergie solaire,l'énergie du vent, celle des vagues et des marées, etc...qui sont produites à des périodes irrégulières ou en des lieux qui ne correspondent pas à ceux où les consommations énergétiques sont les plus importantes . Un problème analogue se présente avec les centrales électriques alimentées par l'énergie nucléaire,ou les usines hydro-électriques dites au fil de l'eau,ou encore avec les centrales thermiques classiques,dont le manque de souplesse est connu.Diverses solutions ont été proposées ou sont en usage,faisant appel à un grand nombre de phénomènes physiques ou chimiques,parmi lesquels on peut citer la dissociation électrolytique de l'eau suivie de la recombinaison de ses constituants,une chaîne analogue de réactions impliquant l'ammoniac,l'utilisation de l'énergie cinétique de rotors tournant à grande vitesse sur des paliers à faible frottement,des phénomènes de fusion et de recristallisation permettant d'absorber et restituer l'énergie à température constante. On connaît également des installations qui ont été construites sur une grande échelle,et qui comportent un bassin d'accumulation situé à une altitude relativement élevée au-dessus d'un point de prise d'eau et d'un point de restitution. Lorsque l'électricité est abondante et peu coûteuse, elle est utilisée à pomper de l'eau vers le bassin d'accumulation,et cette eau est ensuite turbinée pour produire de l'électricité aux moments où les besoins sont plus importants ou bien aux moments où elle peut être vendue à un prix plus élevé. Ces installations ne peuvent pas être généralisées autant qu'on le souhaiterait car les sites où l'on peut créer de tels bassins d'accumulation avec une différence d'altitude suffisante sont en nombre limité. De plus l'implantation de bassins importants peut avoir des conséquences regrettables sur l'environnement et elle peut faire courir des risques non négligeables aux populations et installations qui se trouvent en contre-bas.

La présente invention a pour but de fournir une installation de production,stockage et restitution d'énergie qui ne présente pas les mêmes inconvénients, soit d'un prix de revient relativement peu élevé, soit un bon rendement, soit des effets perturbateurs réduits sur l'environnement, et fasse courir des risques très faibles aux populations et installations environnantes.

La présente invention fournit donc une installation de production et ou stockage d'énergie,comportant des turbines (21)susceptibles d'être mises en rotation sous l'effet de l'eau,en mouvement et d'entraîner une machine de production d'électricité, qui présente la particularité qu'elle comprend une prise d'eau située en surface du sol,une conduite d'eau descendante (6,7) qui s'enfonce dans le sol,à partir de la prise d'eau,une conduite d'eau ascendante(10) qui communique à sa partie inférieure avec la conduite d'eau descendante et qui débouche à la surface du sol à sa partie supérieure,des moyens pour mettre l'eau en mouvement sur un trajet comprenant la conduite descendante et la conduite ascendante et la comprime à une certaine vitesse,les turbines 21 étant disposées pour être mises en rotation par une partie de l'eau en mouvement afin d'entraîner une machine de production d'électricité.

L'invention est donc fondée sur un principe entièrement nouveau,ou du moins qui n'a jamais été utilisé dans l'application décrite,à savoir l'utilisation et la récupération de l'énergie cinétique contenue dans une grande masse d'eau en mouvement. On peut supposer que la raison pour laquelle ce principe n'a pas jusqu'ici été exploité réside dans le fait que la création d'un modèle réduit est incapable de rendre compte de la réalité,en raison des forces de frottement qui augmentent de façon très considérable lorsque la section des conduites devient faible. C'est ce même phénomène qui permet d'estimer possible d'exploiter une réalisation industrielle à partir d'une cellule suffisante.

En fait il a été établi qu'il était nécessaire que la conduite descendante ait une section supérieure à 40 m$^2$ et descende au moins jusqu'au niveau-125 m ,le niveau zéro étant celui de la prise d'eau. Ainsi la masse d'eau qui se trouve dans la conduite descendante est d'au moins 7000 tonnes. De préférence,cette masse est d'au moins 9000 tonnes.

L'ensemble formé par les conduites descendantes et ascendantes remplies d'eau constitue,lorsque cette eau est en mouvement ,un "catapulte" hydraulique d'une grande puissance, cette puissance augmentant naturellement avec la masse d'eau contenue.

La présente invention va maintenant être exposée plus en détail à l'aide d'un exemple pratique non limitatif illustré par les dessins annexés parmi lesquels:

Fig.1A est une vue en coupe schématique de la partie supérieure de l'installation;

Fig.1B est une vue en coupe schématique de la partie inférieure de l'installation,les figures 1A et 1B représentent ensemble une vue en coupe de l'installation complète

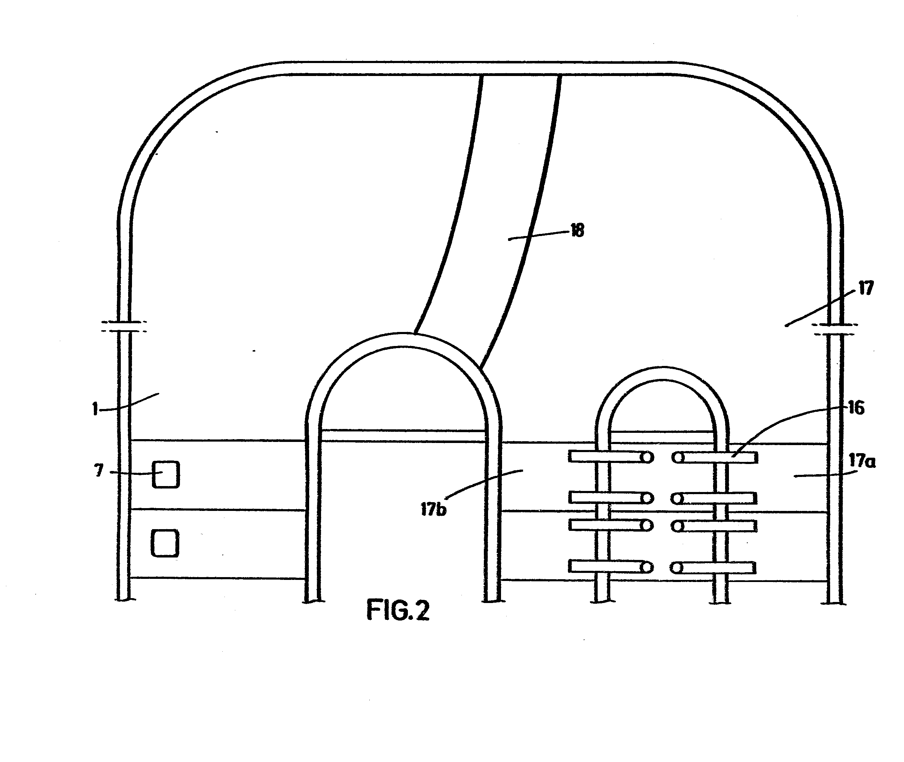

Fig.2 est une vue de dessus de la partie de l'installation qui est en surface;

Fig.3 est une vue en coupe du dispositif d'injection;

Fig.4 est une vue en coupe d'un injecteur;

4

Fig.5 est une vue de dessus d'un clapet.

L'installation décrite ici comprend, à la surface du sol un bassin aval 1 qui constitue le bassin de prise d'eau auquel il a été fait allusion plus haut. Ce bassin maçonné , d'une largeur de 50 m et d'une profondeur de 17 m environ se présente comme un canal de longueur suffisante pour être commun à plusieurs installations comme celle qui va être décrite. Le niveau de l'eau dans ce bassin sera pris dans la suite comme niveau zéro de l'installation. Au fond du bassin 1 débouche une conduite 2 qui sert à la fois de conduite d'amenée d'eau d'appoint et de conduite de vidange. Le débouché de la conduite 2 dans le bassin aval 1 est normalement fermé par une vanne de vidange 3. L'extrémité opposée de la conduite 2 débouche dans une rivière ou une nappe d'eau naturelle(lac, étang)ou artificielle. A proximité de la vanne 3,une pompe 4 est capable de prélever de l'eau dans la conduite 2 et de la déverser dans le bassin 1,au-dessus de la surface de l'eau.

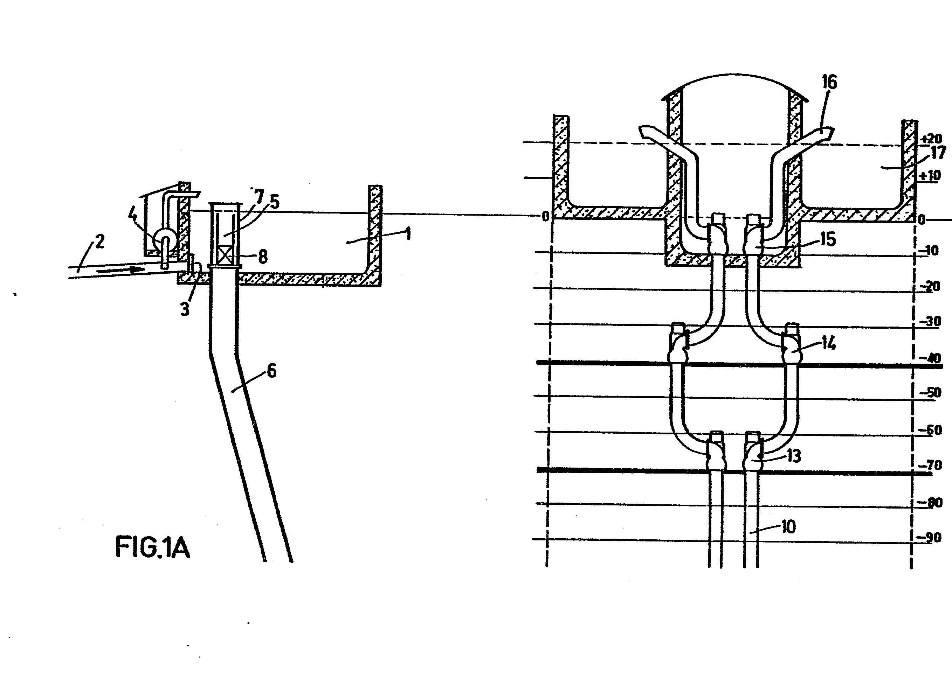

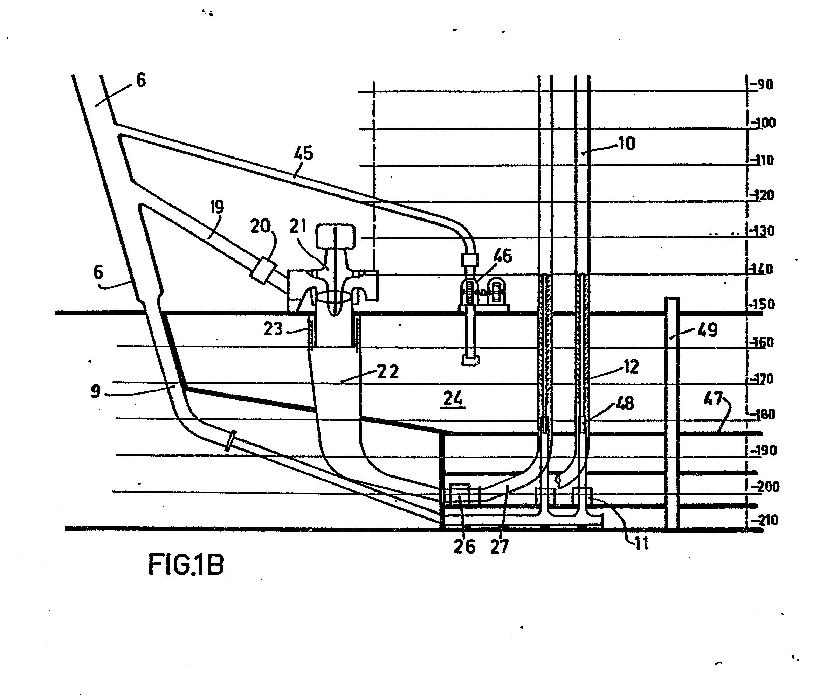

Dans le bassin aval 1 est implanté un ouvrage de prise d'eau 5,destiné à alimenter la galerie descendante 6 de l'installation. L'ouvrage de prise d'eau se présente comme une tour cylindrique 7 montant depuis le fond du bassin aval jusqu'au dessus de sa surface et comportant sur sa paroi un orifice obturé par une vanne coulissante 8. La partie supérieure de la galerie descendante 6 se trouve juste au-dessous de l'ouvrage de prise d'eau 5,qui a une forme adaptée. La section de la galerie descendante a la forme d'un rectangle de 7,60 x 6,90 m,à angles arrondis,d'une surface de 51,44 $m^2$. Cette galerie est en acier. Comme le montrent les figures 1A et 1B,la galerie descendante 6 descend d'abord verticalement puis avec une faible inclinaison sur la verticale jusqu'à la côte -150. Elle se divise ensuite en deux galeries 9 à section circulaire de diamètre 3,5 m .

Les galeries 9 ont une pente qui se réduit par paliers,pour devenir horizontale vers la cote-210,cependant que leur diamètre se réduit de 3,5 m jusqu'à 2 m.

Sur la partie horizontale de chaque galerie 9 sont branchées deux galeries ascendantes 10,soit quatre galeries ascendantes au total.A la base de chacune d'elles est placée une vanne 11.Ces galeries ascendantes 10 sont sensiblement verticales.Elles comportent,entre les niveaux -180 et -140 environ, un dispositif d'injection 12 qui sera décrit plus en détail dans la suite,et aux niveaux - 70, - 40, et - 10,des pompes 13, 14,15 de circulation.

Les galeries ascendantes 10 se terminent légèrement au-dessus du niveau + 20 par un déverseur 16 qui envoie l'eau dans un bassin de réception 17,dont le fond est sensiblement au niveau 0 et où la surface de l'eau est normalement sensiblement au niveau + 20.

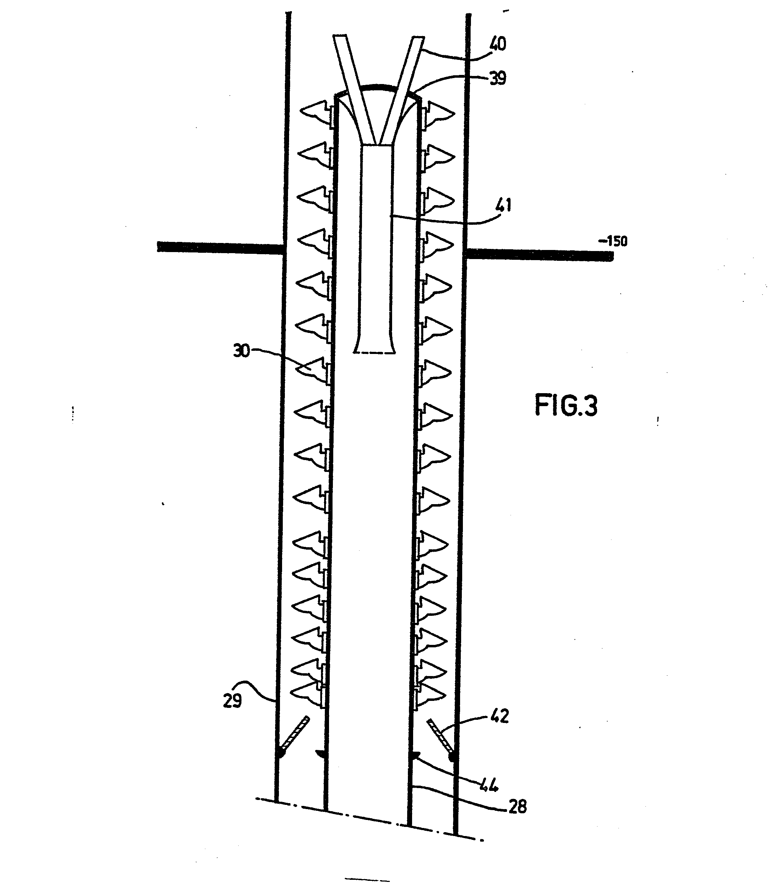

La figure 3 est une vue partielle,de dessus,des parties situées en surface du sol d'un ensemble groupant plusieurs installations selon l'invention.On constate que le bassin de réception 17 est en deux parties 17a et 17b formant chacune un canal, séparées par un terre-plein central qui porte les déverseurs 16 dirigés vers l'une ou l'autre de ces deux parties.A leur extrémité, les deux parties 17a, 17b du bassin de réception se réunissent en un bassin unique séparé par un barrage 18 du bassin aval 1.Ce barrage 18 est équipé de groupes bulbes qui exploitent la différence de niveau entre ces deux bassins, laquelle est de 20 m,pour produire de l'électricité.

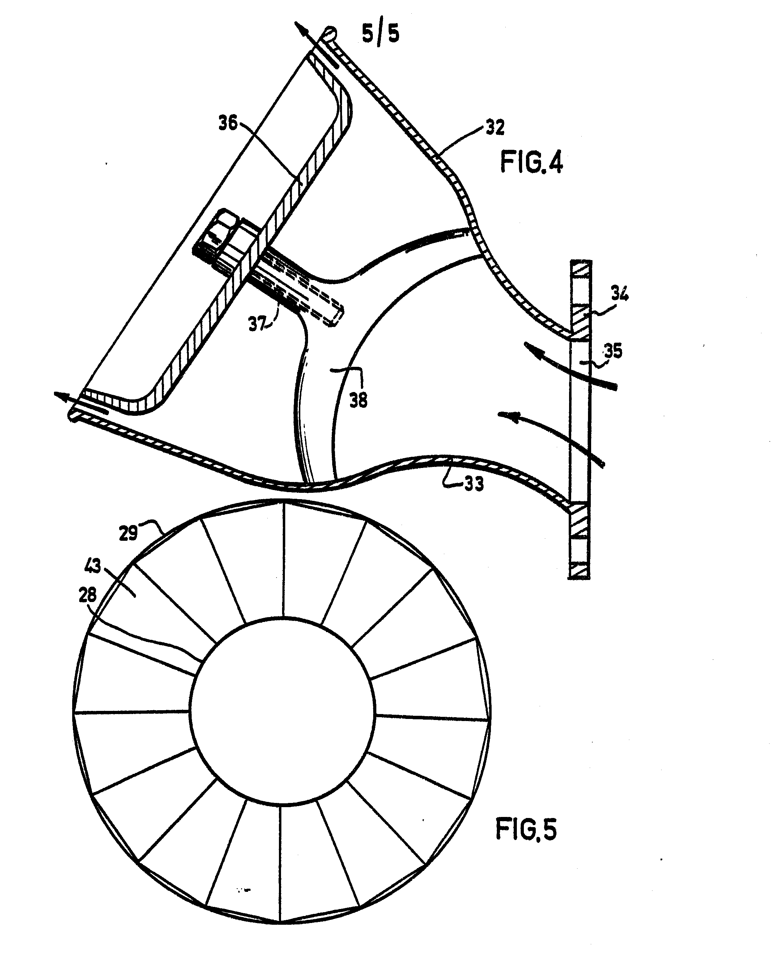

Sur la galerie descendante 6 s'embranche,vers le niveau - 120,une galerie descendante dérivée 19 qui, après une vanne 20,alimente un turbo alternateur 21 avec un débit de 50 m$^3$/sec, et qui est capable de fournir 75 MW.La turbine du turbo alternateur est située au niveau - 150. Les eaux qui ont traversé cette turbine tombent dans un puits vertical 22. A sa partie supérieure,le puits 22 est divisé en deux parties concentriques par une jupe 23 d'environ 10m de haut. Les eaux de rejet du turboalternateur 21 passent par la partie centrale de la jupe 23 et continuent la descente dans le puits 22.A sa partie supérieure le puits 22 sur son pourtour comprend une couronne pourvue de passages de grand diamètre communiquant avec un bassin souterrain 24 et permettant le passage des eaux, soit dans un sens, soit dans l'autre. Le puits 22, d'abord vertical,s'incurve progressivement vers l'horizontale jusqu'à

0132478

6

des vannes 26 qui donnent accès à quatre conduites 27 incurvées vers la verticale ascendante, qui rejoignent les dispositifs d'injection 12, qu'on va maintenant décrire à l'aide des figures 3 et 4.

Un dispositif d'injection comporte un tube central 28, vertical, de diamètre 1,5 m qui fait partie de la galerie ascendante 10 et qui va se raccorder, à sa partie inférieure à la vanne 11 qui est à la base de cette galerie ascendante. Ce tube central 28, s'élève jusqu'au niveau - 140 environ. Un autre tube 29,coaxial au tube central 28, de diamètre 3,3m se raccorde à sa partie inférieure au conduit 27, lui-même relié au puits 22. du turbo alternateur 21.A sa partie supérieure, le tube 29, qui fait lui aussi partie de la galerie ascendante 10, monte jusqu'aux pompes 13. Le tube central 28 porte, entre les niveaux - 172 et -140 environ une série d'injecteurs 30 réparties sur 17 niveaux à raison de 16 injecteurs pour les deux premiers niveaux et de 8 injecteurs pour chacun des autres niveaux. On observera que l'écart entre les niveaux varie progressivement de 1 m entre les deux premiers niveaux à partir du bas à 2 m entre les derniers.

Chaque injecteur 30 comprend un corps 31 creux, en forme de tulipe, c'est-à-dire avec une partie externe 32 conique, qui s'évase vers l'extérieur, et une partie interne 33, de forme torique, qui se raccorde sans à-coup à la partie externe, et sur laquelle est fixée, de l'autre côté, une embase 34, disposée obliquement et munie d'un passage central 35 et de trous de fixation périphériques 36. L'embase 34 se fixe sur la paroi extérieure du tube central 28, lequel est percé d'un orifice qui correspond au passage 35. A l'intérieur de la partie externe 32 une coupelle 36 est soutenue par une vis 37 qui la relie à un support 38 dont les extrémités sont fixées à l'intérieur du corps de l'injecteur; La coupelle a un diamètre inférieur à celui de la partie externe 32, et il est possible, en jouant sur la vis 37 de régler la vitesse de l'eau sortant de l'injecteur.

Il est prévu trois tailles d'injecteurs 30,dont la forme est par ailleurs toujours sensiblement la même. Les injecteurs les plus petits sont destinés aux niveaux inférieurs.

Le tube central 28 est fermé à sa partie supérieure par une cloison 39 traversée par quatre tubes d'injection 40,légèrement obliques sur la verticale,et dont l'extrémité inférieure débouche à l'intérieur d'une chemise de guidage 41,cylindrique et coaxiale intérieurement au tube central 28.

Dans le dispositif d'injection12 l'eau arrivant par le tube central 28,et qui provient de la galerie descendante 6,est animée d'une grande vitesse,et elle transfère une partie de son énergie cinétique à l'eau qui arrive par le tube 29, et qui est passée par la turbine du turbo-alternateur 21. Cette dernière possède une énergie cinétique appréciable, qui lui permettrait de remonter jusqu'au dessus du niveau du turbo-alternateur,mais non pas cependant de sélever jusqu'à proximité de la surface.

A la base du dispositif d'injection 12,un clapet 42 est prévu pour empêcher l'eau du tube 29 de revenir en arrière en cas d'incident.Ce clapet est formé de 16 secteurs de couronne 43,montés à pivot sur la paroi interne du tube 29 et qui, en position de fermeture,reposent sur un siège 44 solidaire du tube central 28.En position ouverte,ils s'effacent vers le haut et n'opposent qu'une résistance réduite au passage de l'eau dans le sens ascendant.

Sur la galerie descendante 6 s'embranche,en plus de la galerie descendante dérivée 19 ,une conduite 45,également descendante,qui alimente un turbo-alternateur de service 46,de 22 MW , de puissance nettement plus faible que le turbo-alternateur principal 21.

L'eau qui a traversé le turbo alternateur de service est envoyée au bassin 24.

Le plancher 47 de ce bassin 24 est situé principalement au niveau -185.Il est traversé par le tube 29,qui est pourvu, juste au-dessus de ce plancher 47 de vannes à tiroir 48 qui permettent la vidange (figure 1B).

8

Sur la figure 1B, le repère 49 désigne un ascenseur pour la desserte des étages inférieurs de l'installation.

L'installation est susceptible de fonctionner de diverses façons, on va maintenant décrire l'une d'elles pour commencer.

Lorsqu'on arrête l'installation,les vannes à tiroir 48 sont ouvertes, si bien que les galeries ascendantes 10 se vident dans le bassin souterrain 24 jusqu'au niveau de l'eau dans ce bassin, puis les vannes 48 sont refermées.

Lorsqu'on ouvre les vannes 11, qui mettent en communication la galerie descendante 6,7 qui est pleine d'eau, et la galerie ascendante 12, qui est partiellement vide, l'eau acquiert dans cette dernière une grande vitesse ascendante qui lui permet de remonter jusqu'à la surface et aux éjecteurs 16, avec l'aide des pompes 13, 14, 15 et, en même temps dans le dispositif d'injection 12, d'entraîner l'eau contenue dans le puits 22 et les conduites 27. L'ouverture de la vanne 20 permet de mettre en route le turbo-alternateur 21, l'eau turbinée étant, de la même manière entraînée vers la surface grâce au dispositif d'injection 12, et grâce à l'effet de "catapulte" correspondant à l'eau circulant à grande vitesse dans les canalisations.

Par ailleurs l'ouverture partielle des vannes 48 permet un vidage progressif des galeries ascendantes 10 dans le bassin souterrain 24. Ce vidage terminé, les vannes 49 se referment permettant la remise en marche, à vide, suivante.

Simultanément, les groupes bulbes prévus dans le barrage 18 peuvent se mettre en marche, assurant ainsi une production d'énergie complémentaire de l'ordre de 24 MW.

9

## REVENDICATIONS

1. Installation de production et/ou stockage d'énergie, comportant des turbines (21) susceptibles d'être mises en rotation sous l'effet de l'eau, en mouvement et d'entraîner une machine de production d'électricité, caractérisée en ce qu'elle comprend une prise d'eau située en surface du sol, une conduite d'eau descendante (6,7) qui s'enfonce dans le sol, à partir de la prise d'eau, une conduite d'eau ascendante (10) qui communique à sa partie inférieure avec la conduite d'eau descendante et qui débouche à la surface du sol à sa partie supérieure, des moyens pour mettre l'eau en mouvement sur un trajet comprenant la conduite descendante et la conduite ascendante et la comprimer à une certaine vitesse, les turbines (21) étant disposées pour être mises en rotation par une partie de l'eau en mouvement afin d'entraîner une machine de production d'électricité.

2. Installation selon la revendication 1, caractérisée en ce que la galerie descendante (6) a une section d'au moins 40 $m^2$ et descend jusqu'à au moins environ 125 m au-dessous du niveau de la prise d'eau.

3. Installation selon la revendication 1, caractérisée en ce que les moyens pour mettre l'eau en mouvement comprennent des pompes (13,14,15) situées dans la galerie ascendante.

4. Installation selon l'une des revendications 1 à 3, caractérisée en ce que les turbines (21) sont situées au moins à 150m au-dessous du niveau de la prise d'eau, sont alimentées par une dérivation (19) de la galerie descendante, et en ce que l'eau ayant traversé les turbines est remontée vers la surface par la conduite ascendante (10).

5. Installation selon la revendication 4, caractérisée en ce que l'eau provenant des turbines est entraînée vers la surface grâce à des éjecteurs (30) disposés en partie basse de la galerie ascendante et alimentés par de l'eau qui provient de la galerie descendante et n'a pas traversé les turbines.

10

6.Installation selon l'une des revendications 1 à 5, et comprenant un bassin de réception (17)disposé pour recevoir l'eau sortant de la galerie ascendante,caractérisée en ce que le bassin peut être rempli jusqu'à un niveau supérieur à celui de la prise d'eau,et en ce qu'il est prévu des moyens (18)pour exploiter la différence entre ces niveaux en produisant de l'énergie électrique.

7.Installation selon l'une des revendications 1 à 6, caractérisée en ce qu'elle comprend une galerie descendante (6,7) descendant jusqu'à au moins 200 m au-dessous du niveau de la prise d'eau,une galerie ascendante (10) équipée d'un dispositif d'éjection (12) à sa partie inférieure et de pompes (13,14,15) dans sa partie supérieure,communiquant à sa base avec la galerie descendante et ouverte à son sommet,un groupe turboalternateur principal (21) alimenté par une dérivation (19)de la galerie descendante et dont le conduit d'évacuation d'eau (22,27) est relié audit dispositif d'éjection (12)pour permettre la remontée de l'eau turbinée vers la surface,un turbo-alternateur de service (46) alimenté par une autre dérivation de la galerie descendante et dont les moyens d'évacuation de l'eau se déversent dans un bassin souterrain (24),qui communique,à son niveau supérieur avec la conduite (22)d'évacuation d'eau du turbo-alternateur principal et, à sa base,avec la conduite ascendante (10).

1/5

FIG.1A

FIG.1B

FIG.2

FIG.3

**0132478**

5/5

36    32    FIG.4

37    34

35

38    33

29    FIG.5

43

28

Office européen
des brevets

**RAPPORT DE RECHERCHE EUROPEENNE**

0132478

Numéro de la demande

EP 83 40 1605

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | DE-A-3 044 551 (ASSAF, BRONICKI) <br> * page 13, ligne 21 - page 17, ligne 22 * | 1,3,4, 5,6,7 | F 03 B 13/06 |
| A | FR-A- 525 293 (BUISSON) <br><br> * page 2, ligne 60 - page 4, ligne 37 * | 1,3,5, 6 | |
| A | FR-A-1 451 247 (LIBERATI) | | |
| A | US-A-1 921 905 (BLOM) | | |
| A | JP-A-57 181 975 (HIROSHI OCHIAI) | | **DOMAINES TECHNIQUES RECHERCHES (Int. Cl. 3)** <br><br> F 03 B |

Le présent rapport de recherche a été établi pour toutes les revendications

| Lieu de la recherche <br> LA HAYE | Date d'achèvement de la recherche <br> 04-04-1984 | Examinateur <br> DE WINTER P.E.F. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82